# EUROPÄISCHE PATENTANMELDUNG

(11) **EP 0 922 558 A1**
(43) Veröffentlichungstag der Anmeldung: **16.06.1999**
(21) Anmeldenummer: 98120789.7
(22) Anmeldetag: 03.11.1998
(51) Int. Cl.: B29C 47/68, B01D 35/14

(54) **Vorrichtung zum Filtrieren einer verunreinigten viskosen Spinnmasse**

(30) Priorität: 18.11.1997 DE 19751009; 12.01.1998 DE 19800744
(71) Anmelder: Kreyenborg Verwaltungen und Beteiligungen GmbH & Co. KG, D-48157 Münster (DE)
(72) Erfinder: Stude, Rolf-Rüdiger, 48157 Münster (DE)
(74) Vertreter: Habbel, Hans-Georg, Dipl.-Ing.

(57) **Zusammenfassung**

Die Erfindung bezieht sich auf eine Vorrichtung zum Filtrieren einer verunreinigten viskosen Spinnmasse mit einem Gehäuse mit einem Zustromkanal und einem Abstromkanal für das verunreinigte bzw. das filtrierte Fluid, wobei das Gehäuse wenigstens eine Führung für wenigstens einen Siebträgerkörper aufweist, der in der Führung des Gehäuses verschiebbar gelagert ist und wenigstens ein Sieb trägt, wobei der Siebträgerkörper und die Führung derart gestaltet sind, daß ein Spalt zwischen der Führung und dem Siebträgerkörper gebildet ist und dieser Spalt ohne Zuhilfenahme von Abstandshaltern od. dg. allein durch den Druck des zu filtrierenden Mediums aufrechterhalten bleibt.

## Beschreibung

Die Erfindung betrifft eine Vorrichtung zum Filtrieren einer teilchenhaltigen viskosen Spinnmasse gemäß dem Oberbegriff des Hauptanspruches.

Für die Zwecke der vorliegenden Beschreibung und der vorliegenden Patentansprüche werden die Bezeichnungen Fluid, viskose Masse bzw. Spinnmasse insbesondere für eine Lösung verwendet, welche Cellulose und ein wässriges tertiäres Aminoxid enthält und welche zu cellulosischen Formkörpern jeglicher Art, insbesondere Fasern und Folien, verarbeitet werden kann. Die Herstellung der Spinnmasse und ihre Verarbeitung wird der Einfachheit halber allgemein als Aminoxidverfahren bezeichnet.

Tertiäre Aminoxide sind als alternative Lösungsmittel für Cellulose bekannt. Aus der US-PS 2 179 181 ist beispielsweise bekannt, daß tertiäre Aminoxide Cellulose ohne Derivatisierung zu lösen vermögen und daß aus diesen Lösungen durch Fällung cellulosische Formkörper, wie Fasern, gewonnen werden können. Aus der EP-A-0 553 070 sind weitere tertiäre Aminoxide bekannt. Andere Aminoxide sind z. B. in der EP-A-0 553 070 und in der US-A-4 196 282 beschrieben. Alle tertiären Aminoxide, die Cellulose zu lösen vermögen, sind gemeint, wenn nachfolgend der Einfachheit halber lediglich NMMO (=NMethylmorpholin-N-oxid) angesprochen wird.

Tertiäre Aminoxide bieten als alternative Lösungsmittel insofern einen Vorteil, als die Cellulose im Gegensatz zum Viskoseverfahren vom NMMO nicht-derivatisierend gelöst wird, wodurch die Cellulose nicht chemisch regeneriert werden muß, das NMMO chemisch unverändert bleibt und beim Fällen in das Fällbad übergeht, aus diesem rückgewonnen und für eine erneute Lösungsbereitung wiederverwendet werden kann. Das NMMO-Verfahren eröffnet somit die Möglichkeit eines geschlossenen Lösungsmittelkreislaufes. Dazu kommt noch, daß NMMO eine äußerst geringe Toxizität aufweist.

Beim Auflösen von Cellulose in NMMO nimmt jedoch der Polymerisationsgrad der Cellulose ab. Zusätzlich führt insbesondere die Anwesenheit von Metallionen (z. B. Fe3+) zu radikalisch initiierten Kettenspaltungen und damit zu einem deutlichen Abbau der Cellulose und des Lösungsmittels (Buijtenhuijs et al.: The Degradation and Stabilization of Cellulose Dissolved in N-Methylmorpholin-N-Oxide (NMMO), in 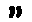 Das Papier", 40. Jahrgang, Heft 12, Seiten 615 - 619, 1986).

Auch Aminoxide weisen allgemein nur eine begrenzte Thermostabilität auf, die in Abhängigkeit von der Struktur variiert. Das Monohydrat von NMMO liegt unter Normalbedingungen als weißer kristalliner Feststoff vor, der bei 72° C schmilzt. Die Anhydroverbinding schmilzt hingegen erst bei 172° C. Beim Erhitzen des Monohydrates tritt ab 120/130° C eine starke Verfärbung auf. Ab 175° C wird eine exotherme Reaktion unter vollständiger Entwässerung der Schmelze und heftiger Gasentwicklung mit explosionshaftem Verlauf ausgelöst, wobei Temperaturen über 250° C erreicht werden.

Es ist bekannt, daß metallisches Eisen und Kupfer, sowie insbesondere deren Salze, die Zersetzungstemperaturen von NMMO beträchtlich herabsetzen, wobei gleichzeitig die jeweilige Zersetzungsgeschwindigkeit erhöht wird.

Im übrigen tritt zu den oben genannten Problemen noch ein weiteres: Die thermische Instabilität der NMMO-Cellulose-Lösungen selbst. Darunter ist zu verstehen, daß in den Lösungen bei den erhöhten Temperaturen der Verarbeitung (etwa 110-120° C) unkontrollierbare Zersetzungsprozesse ausgelöst werden können, die unter Entwicklung von Gasen zu heftigen Verpuffungen, Bränden und sogar zu Explosionen führen können.

Im Zuge der großtechnischen Verarbeitung von Lösungen von Cellulose in einem wäßrigen Aminoxid zu Spinnmassen müssen diese Lösungen einer Filtration unterworfen werden, um sicherzustellen, daß teilchenförmige Verunreinigungen, wie z. B. ungelöste Zellstoffteilchen, nicht in die Spinnmaschine gelangen und die feinen Spinnlöcher verstopfen. Diese Filtrierung kann mit einer Vielzahl von Filtern vorgenommen werden, wobei sich insbesondere sogenannte Rückspülfilter, wie sie z. B. aus der EP-A-0 250 695 oder der EP-A-0 372 203 bekannt sind, als geeignet erwiesen haben.

Herkömmliche Filtriervorrichtungen besitzen im wesentlichen ein Gehäuse mit einem Zustrom- und einem Abstromkanal für das verunreinigte bzw. das filtrierte Fluid, eine Führung für einen Siebträgerkörper, einen Siebträgerkörper, welcher in der Führung des Gehäuses verschiebbar gelagert ist, und ein Sieb, welches sich im Siebträgerkörper befindet. Ist das Sieb verstopft, so muß es gewechselt bzw. gereinigt werden. Dazu wird der Siebträgerkörper in der Führung so verschoben, daß beispielsweise der Zustromkanal vom Siebträgerkörper verschlossen wird und jene Stelle des Siebträgerkörpers, welche das Sieb aufweist, an eine der Reinigung zugängliche Stelle gelangt. Anschließend wird der Siebträgerkörper wieder in seine Ausgangsstellung zurückgeschoben.

Es sind auch komplexer aufgebaute Rückspülfilter oder Siebwechsler bekannt. Allen ist jedoch gemeinsam, daß sie die oben aufgezählten Vorrichtungsmerkmale aufweisen, wobei sich der Siebträgerkörper paßgenau, d. h. ohne Spiel, in der Führung befindet.

Es hat sich gezeigt, daß sich bei Verwendung derartiger Filtriervorrichtungen zur Filtration von Spinnmassen trotz der engen Paßform in der Führung ein dünner Film aus Spinnmasse auf dem Siebträgerkörper ausbildet, haften bleibt, sich mit der Zeit zersetzt und dabei in hohem Ausmaß korrosiv wird und den metallischen Siebträgerkörper bzw. die Führung chemisch angreift. Dabei reichert sich dieser Film mit Metallen an. Die bei Rückspülung des Filters bzw. bei Siebwechsel notwendige Verschiebung des Siebträgerkörpers bewirkt dann bei Vorhandensein solcher Abbaureste und Beläge einen Eintrag dieser gefährlichen Rückstände in die Spinnmasse. Dies ist sehr gefährlich, da, wie bereits oben erwähnt, auf diese Weise Exothermien in der Spinnmasse ausgelöst werden können.

Aus der EP-A-0 652 098 ist ein Verfahren zur Filtration einer thermisch instabilen Polymerschmelze bekannt, wobei tote Zonen, an denen sich Polymerschmelzen ansammeln und zersetzen können, vermieden werden sollen. Dies wird bei einem Verfahren erreicht, bei dem die Polymerschmelze von unten in die von Wärmeträgerflüssigkeit umspülten Rohre eines Rohrbündelwärmetauschers gepumpt wird, wobei in jedes Wärmetauscherrohr eine Filterkerze unter Ausbildung eines äußeren Ringspaltes derart eingesetzt ist, daß der Hauptstrom der Polymerschmelze nach Durchtritt durch die Filterkerzen und ein Nebenstrom ohne Durchtritt durch die Filterkerzen oben aus den Wärmetauscherrohren austreten und anschließend vereinigt werden.

Technische Maßnahmen zur Vermeidung von Totzonen wurden z. B. in der WO 94/02 408 beschrieben, wobei ein Abdichtprinzip zur Anwendung kommt, um das Eindringen von Spinnmasse zwischen bewegte Behälterteile zu verhindern.

Die vorliegende Erfindung stellt sich zur Aufgabe, eine Vorrichtung zum Filtrieren eines verunreinigten Fluids zu schaffen.

Es ist schon vorgeschlagen worden, daß der Siebträgerkörper und die Führung derart gestaltet sind, daß ein Spalt zwischen der Führung und dem Siebträgerkörper gebildet wird, und daß ein Abstandshalter vorgesehen ist, der sicherstellt, daß sich der Spalt zwischen Führung und Siebträgerkörper während des Filtrierens an keiner Stelle schließt, so daß während des Filtrierens ständig Fluid durch den Spalt ausströmen kann.

Dieser Vorschlag beruht auf der Erkenntnis, daß die Probleme, welche eine degenerierte Celluloselösung, die sich als Belag auf dem Siebträgerkörper absetzt, hervorruft, nicht dadurch gelöst werden können, daß über eine weitere Erhöhung der Paßgenauigkeit zwischen Siebträgerkörper und Führung versucht wird, zu verhindern, daß sich ein Belag ausbilden kann, sondern daß geradezu im Gegenteil ein Spalt vorgesehen werden soll, aus dem ein kleiner Teil der verarbeiteten Celluloselösung gezielt austreten kann.

Es soll also ein Spalt vorgesehen werden, der sich während des Filtrierens an keiner Stelle schließt, so daß während des Filtrierens ständig Fluid aus dem Spalt austreten kann. Mit Abstandshaltern soll sichergestellt werden, daß sich der Spalt während des Betriebs des Filters nicht schließt. Auf diese Weise kann sich keine Spinnmasse am Siebträgerkörper als Belag ansammeln, und die Oberflächen des Siebträgerkörpers und der Führung bleiben ständig umspült und daher blank.

Die gemäß dem älteren Vorschlag vorgeschlagenen Abstandshalter wurden dabei als nachteilig empfunden, z. B. daß Verschleißerscheinungen auftreten können oder daß sich doch in diesem Bereich Beläge ausbilden können, und die Erfindung schlägt nunmehr vor, daß unter Vermeidung derartiger Abstandshalter allein durch den Druck des zu filtrierenden Fluids ein bleibender Ringspalt zwischen dem Siebträgerkörper und der Innenseite der Führung aufgebaut wird, der auch erhalten bleibt trotz des einseitig auf den Siebträgerkörper ausgeübten Druck des in die Filtriervorrichtung eingepreßten, zu filtrierenden Materials.

Durch diesen Vorschlag, der für die Fachwelt überraschend ist, wird erreicht, daß zwischen dem Siebträgerkörper und der Innenwandung der Führung keine reibenden Bauteile vorhanden sein müssen, daß sich dort keine Beläge ausbilden können und daß dadurch das der Erfindung zugrundeliegende Ziel, einen Siebträgerkörper zu schaffen, der in der Führung des Gehäuses verschiebbar gelagert ist, bei welchem eine Ausbildung der oben beschriebenen Filme bzw. Beläge verhindert wird, in vorteilhafter Weise erreicht wird.

Vorzugsweise wird dafür Sorge getragen, daß der Spalt zwischen Siebträgerkörper und Führung sich in Axialrichtung des Siebträgerkörpers konisch verjüngt, wodurch der erforderliche Druckaufbau zwischen Außenseite des Siebträgerkörpers und der Innenseite der Führung natürlich noch verbessert wird.

Ein Ausführungsbeispiel der Erfindung wird nachfolgend anhand der Zeichnungen erläutert. Die Zeichnungen zeigen dabei in
- Fig. 1: eine Anordnung in der sogenannten Produktionsstellung, d. h. ein Filtergehäuse mit vorgesetztem Steuergehäuse, in
- Fig. 2: einen Schnitt durch den im Steuergehäuse angeordneten Bolzen, in
- Fig. 3: in einer in Fig. 1 entsprechenden Darstellungsweise die Rückspülstellung und in
- Fig. 4: einen Schnitt durch das Steuergehäuse mit dem darin angeordneten Bolzen in der Rückspülstellung.

Bei dem dargestellten Ausführungsbeispiel ist ein Filtergehäuse 1 vorgesehen, dem ein Steuergehäuse 10 vorgeschaltet ist. Das Filtergehäuse 1 weist einen Austrittshauptkanal 7 auf und das Steuergehäuse 10 einen Eintrittshauptkanal 6, wobei vor dem Eintrittshauptkanal 6 eine in der Zeichnung nicht dargestellte Vorrichtung vorgesehen sein kann, durch welche das zu filtrierende Medium dem Eintrittshauptkanal 6 unter dem entsprechend hohen Druck zugeführt wird.

Innerhalb des Steuergehäuses 10 teilt sich der Eintrittshauptkanal 6 in zwei Eintrittsteilkanäle 8a und 8b. Weiterhin sind innerhalb des Filtergehäuses 1 quer zur Ausrichtung der Eintrittsteilkanäle 8a und 8b verschiebbare, als Siebträgerelemente ausgebildete Siebbolzen 2 und 3 angeordnet, in denen als Filterelemente ausgebildete Siebräume vorgesehen sind, in denen Siebe vorgesehen werden, so daß in den Siebräumen eine Schmutzsiebseite und eine Reinsiebseite gebildet wird. An die Reinsiebseite der Siebbolzen 2 und 3 schließen sich die Austrittsteilkanäle 9a und 9b an, die zu dem Austrittshauptkanal 7 führen. Vor dem eigentlichen Filtergehäuse 1 ist das Steuergehäuse 10 vorgesehen, das einen als Sperrmittel ausgebildeten Bolzen 11 aufweist, der über hydraulische, pneumatische oder sonstige Mittel quer zur Strömungsrichtung des zu filtrierenden Mediums verschiebbar ist.

Die Fließverbindung zwischen dem Eintrittshauptkanal 6 und den Eintrittsteilkanälen 8a und 8b wird durch eine Einschnürung 12 im Bolzen 11 erreicht, wobei bei dem dargestellten Ausführungsbeispiel der Bolzen 11 zylindrisch ausgebildet ist, d. h. im Querschnitt rund, und die Einschnürung 12 über den ganzen Außenumfang des Bolzens 11 vorgesehen wird. Der Bolzen 11 kann auch polygonal ausgebildet sein.

Der Bolzen 11 weist weiterhin einen Abführhauptkanal 16 auf, der sich bei dem dargestellten Ausführungsbeispiel zentrisch in Längsachse des Bolzens 11 gesehen erstreckt und einenendes zur Atmosphäre hin frei mündet. Zwei Abführteilkanäle 14 und 15 erstrecken sich quer zur Längsachse des Abführhauptkanales 16 und münden einenendes in den Abführhauptkanal 16 und anderenendes an der Außenseite des Bolzens 11, wobei natürlich auch andere Ausgestaltungen des oder der Abführkanäle vorgesehen sein können.

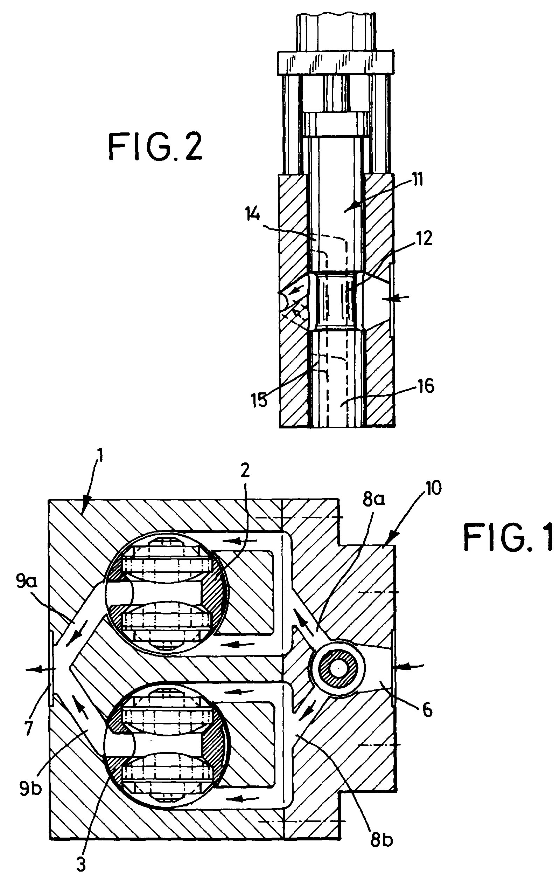

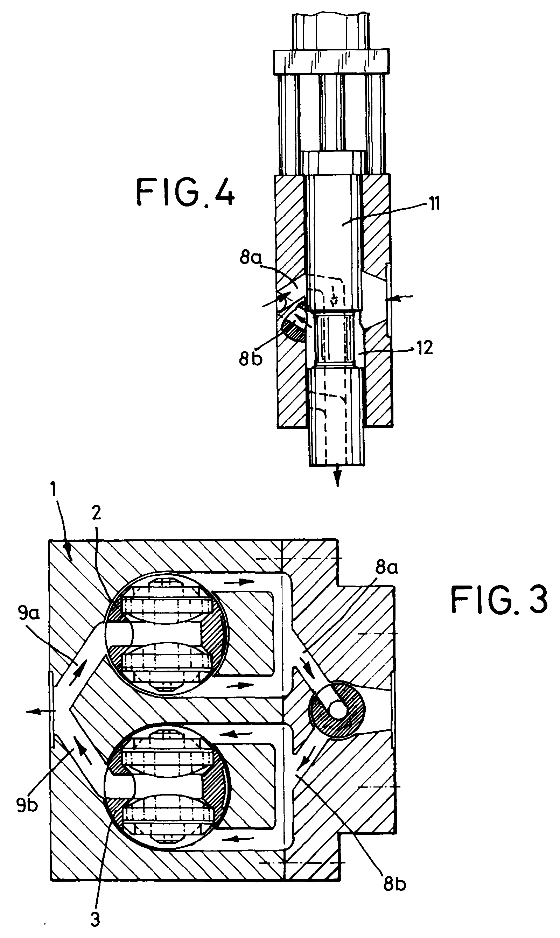

Die Fig. 1 und 2 zeigen die Produktionsstellung. Durch Einstellen des Bolzens 11 in die in Fig. 2 dargestellte Stellung wird die Einschnürung 12 mit den beiden Eintrittsteilkanälen 8a und 8b in Verbindung gesetzt, so daß das durch den Eintrittshauptkanal 6 einströmende Medium zu den Siebbolzen 2 und 3 geführt wird, hier gefiltert wird und dann durch die Austrittsteilkanäle 9a und 9b zum Austrittshauptkanal 7 fließt.

Durch Verstellen des Bolzens 11 in die in Fig. 4 dargestellte Stellung wird der Eintrittsteilkanal 8b mit der Einschnürung 12 verbunden und der Eintrittsteilkanal 8a mit dem Abführteilkanal 14, so daß nunmehr das zu filtrierende Medium gemäß der Darstellung in Fig. 3 einerseits zum Siebbolzen 3 fließt, aber nicht von der Einschnürung zum Siebbolzen 2 fließen kann, sondern über den Austrittshauptkanal 9a fließt ein Teil des gefilterten Mediums zum Siebbolzen 2 zurück und fließt dann über den Eintrittsteilkanal 8a zum Abführteilkanal 14 und von dort zum Abführhauptkanal 16 zur Atmosphäre.

In den Zeichnungen ist der Bolzen 11 innerhalb seiner Bohrung und sind die Siebbolzen 2 und 3 innerhalb ihrer Bohrung mit großem Spiel dargestellt. Dies ist nur zur Verdeutlichung der Erfindung und in der Zeichnung übertrieben, wobei in der Praxis der Spalt beispielsweise 2/10 bis 4/10 mm betragen kann.

## Patentansprüche

1. Vorrichtung zum Filtrieren einer verunreinigten viskosen Spinnmasse mit einem Gehäuse mit einem Zustromkanal und einem Abstromkanal für das verunreinigte bzw. das filtrierte Fluid, wobei das Gehäuse wenigstens eine Führung für wenigstens einen Siebträgerkörper aufweist, einem Siebträgerkörper, welcher in der Führung des Gehäuses verschiebbar gelagert ist und wenigstens einem Sieb, welches sich im Siebträgerkörper befindet, wobei der Siebträgerkörper und die Führung derart gestaltet sind, daß ein Spalt zwischen der Führung und dem Siebträgerkörper gebildet ist, dadurch gekennzeichnet, daß unter Verzicht auf Abstandshalter auch während des Filtrierverfahrens ein Ringspalt zwischen Siebträgerkörper und Gehäuse aufrechterhalten wird.

2. Vorrichtung nach Anspruch 1, dadurch gekennzeichnet, daß sich der zwischen Siebträgerkörper und Führung gebildete Spalt konisch nach unten verjüngt, aber nicht ganz geschlossen ist.
